# EUROPÄISCHE PATENTSCHRIFT

(11) **EP 3 956 253 B1**
(45) Veröffentlichungstag und Bekanntmachung des Hinweises auf die Patenterteilung: **17.07.2024**
(21) Anmeldenummer: 20712871.1
(22) Anmeldetag: 12.03.2020
(51) Int. Cl.: B66F 9/075, B62D 7/15

(54) **LENKVERFAHREN UND LENKSYSTEM FÜR EIN FLURFÖRDERZEUG**
STEERING METHOD AND STEERING SYSTEM FOR AN INDUSTRIAL TRUCK
PROCÉDÉ DE DIRECTION ET SYSTÈME DE DIRECTION D'UN CHARIOT DE MANUTENTION

(30) Priorität: 16.04.2019 DE 102019109995
(43) Veröffentlichungstag der Anmeldung: 23.02.2022
(73) Patentinhaber: Hubtex Maschinenbau GmbH & Co. KG, 36041 Fulda (DE)
(72) Erfinder: KELLER, Jürgen, 36137 Großenlüder (DE)
(74) Vertreter: Kluin Patent
(86) Internationale Anmeldenummer: PCT/EP2020/056616
(87) Internationale Veröffentlichungsnummer: WO 2020/212028

(56) Entgegenhaltungen:
- EP-A2- 2 253 528
- WO-A1-2018/028495
- DE-A1- 4 303 342
- US-A1- 2003 105 563

## Beschreibung

Die Erfindung betrifft ein Lenkverfahren eines einen Fahrantrieb aufweisenden Flurförderzeugs mit mindestens drei motorisch lenkbaren Rädern, bei dem mittels eines Lenksollwertgebers zumindest eines der mindestens drei lenkbaren Räder gelenkt und die Winkelpositionen des mindestens einen gelenkten der mindestens drei lenkbaren Räder erfasst und mit Winkelsollwerten, die von einem Lenkcomputer bereitgestellt werden, verglichen werden. Die Erfindung betrifft darüber hinaus ein Lenksystem für ein einen Fahrantrieb aufweisendes Flurförderzeug mit mindestens drei lenkbaren Rädern, mit einem Lenksollwertgeber und mit mindestens drei Lenkmotoren zum Lenken jeweils eines lenkbaren Rades. Darüber hinaus betrifft die Erfindung ein mit einem derartigen Lenksystem ausgerüstetes Flurförderzeug.

Hydraulisch arbeitende Lenkverfahren und Lenksysteme sind bei Flurförderzeugen bereits seit langem bekannt. Sie weisen den Nachteil auf, dass sich unterschiedliche Lenkprogramme, beispielsweise zum Betrieb des Flurförderzeugs in Längs-, Quer- oder Diagonalfahrt, nur durch einen erheblichen, konstruktiven Aufwand umsetzen lassen. Auch ist der energetische Wirkungsgrad dieser Lenkverfahren und Lenksysteme durch eine ständig laufende Hydraulikpumpe schlecht und die Geräuschentwicklung ist hoch. Zudem ist der für die notwendige hydraulische Verrohrung erforderliche Fertigungsaufwand erheblich.

Aus der Druckschrift DE 43 03 342 A1 ist ein Lenkverfahren für ein Flurförderzeug bekannt, bei welchem vier Räder des Flurförderfahrzeugs elektrisch gelenkt werden. Die Druckschriften US 2003 105 563 A1 und WO 2018 / 028 495 A1 offenbaren weitere Lenkverfahren. Aus der Druckschrift EP 2 253 528 A2 ist die Einstellung eines Lenkpoles bekannt.

Der Erfindung liegt daher die Aufgabe zugrunde, ein Lenkverfahren und ein Lenksystem für Flurförderzeuge mit zumindest drei lenkbaren Rädern bereitzustellen, welche bezüglich zumindest eines dieser Nachteile verbessert sind.

Diese Aufgabe wird durch das in Anspruch 1 wiedergegebene Lenkverfahren sowie das in Anspruch 10 wiedergegebene Lenksystem gelöst.

Bei dem erfindungsgemäßen Lenkverfahren wird in Abhängigkeit der ermittelten Differenz zwischen den erfassten Winkelpositionen zumindest eines der mindestens drei gelenkten Räder und den von dem Lenkcomputer bereitgestellten Winkelsollwerten eine elektrische Leistungselektronik angesteuert, und der jeweilige Lenkmotor mit der zur Reduzierung der Differenz erforderlichen elektrischen Energie beaufschlagt. Erfindungsgemäß erfolgt der Antrieb der Lenkmotoren somit nicht mehr hydraulisch, sondern elektrisch.

Vorzugsweise wird auch der Fahrantrieb elektrisch betrieben. Besonders bevorzugt ist jedem angetriebenen Rad ein eigener, elektrisch betriebener Antriebsmotor zugeordnet. Der Fahrantrieb umfasst dann eine Anzahl von Elektromotoren, die der Anzahl der angetrieben Räder entspricht.

Besonders bevorzugt ist an den Lenksollwertgeber ein manuell betätigbarer Lenkgeber angeschlossen, durch dessen Betätigung die Winkelsollwerte beeinflusst werden. Bei dem Lenkgeber kann es sich insbesondere um ein Lenkrad oder um einen Joystick handeln.

Um das Risiko zu reduzieren, dass ein mit Hilfe des erfindungsgemäßen Lenkverfahrens gelenktes Flurförderzeug in der jeweiligen Fahrgeschwindigkeit in nicht angemessener Weise gelenkt wird, was zu schwer oder nicht kontrollierbaren Fahrzuständen führen könnte, werden mit Hilfe der Leistungselektronik vorzugsweise auch der oder die Fahrmotoren mit elektrischen Leistungen beaufschlagt, die in Abhängigkeit der Winkelsollwerte auf maximal zulässige Antriebsleistungen beschränkt sind.

Bei einer besonders bevorzugten Weiterbildung des erfindungsgemäßen Lenkverfahrens werden die Winkelpositionen der mindestens drei motorisch lenkbaren Räder in Abhängigkeit von wählbaren Lenkprogrammen gelenkt.

Bei einer des Weiteren bevorzugten Weiterbildung des erfindungsgemäßen Lenkverfahrens wird während des Wählens eines Lenkprogramms der Fahrantrieb des Flurförderzeugs inaktiviert. Des Weiteren ist es bevorzugt, wenn alternativ oder zusätzlich während des Wählens eines Lenkprogramms der Lenkgeber inaktiviert wird, d. h. eine Betätigung des Lenkgebers, beispielsweise die Drehung des Lenkrades, nicht zu einer Beaufschlagung zumindest eines der Lenkmotoren mit elektrischer Leistung führt. Die Betriebssicherheit des Flurförderzeugs wird aufgrund dieser Maßnahmen erhöht.

Bei einer des Weiteren bevorzugten Ausführungsform des erfindungsgemäßen Lenkverfahrens umfassen die wählbaren Lenkprogramme ein Längsfahrtprogramm und ein Querfahrtprogramm. Die Längs- und Querfahrtprogramme unterscheiden sich dadurch, dass die Neutralstellung sämtlicher Räder um Winkelpositionen von 90° voneinander verschieden sind.

Besonders bevorzugt ist es, wenn bei dem Längsfahrtprogramm und/oder bei dem Querfahrtprogramm zwischen Unterlenkprogrammen Vorderachslenkung, Hinterachslenkung und Allradlenkung gewählt werden kann. Mit "Vorderachslenkung" ist ein Unterlenkprogramm gemeint, bei welchem aufgrund einer Betätigung des Lenkgebers, beispielsweise einer Drehung des Lenkrades, lediglich die Räder der in Vorwärts-Fahrtrichtung vorderen Achse gelenkt werden. Dementsprechend ist unter "Hinterachslenkung" ein Lenkunterprogramm zu verstehen, bei welchem bei einer Betätigung des Lenkgebers lediglich die Räder der in Vorwärtsfahrtrichtung gesehenen hinteren Achse gelenkt werden. Im Unterprogramm "Allradlenkung" werden dementsprechend bei einer Betätigung des Lenkgebers sämtliche Räder des Flurförderzeugs gelenkt.

Ebenfalls bevorzugt ist eine Weiterbildung des erfindungsgemäßen Lenkverfahrens, bei welcher die wählbaren Lenkprogramme ein Karussellfahrtprogramm und/oder ein Diagonalfahrtprogramm und/oder ein Parkprogramm umfassen. Beim Karussellfahrtprogramm werden sämtliche Räder in Winkelpositionen gebracht, die bei einem Antrieb des Flurförderzeugs zu einer Drehung desselben um einen Drehpunkt, der innerhalb einer Grundfläche des Flurförderzeugs liegt, führt. Beim so genannten "Parkprogramm" werden gelenkte Räder des Flurförderzeugs in Winkelpositionen gebracht, in denen eine Verlagerung des Flurförderzeugs relativ zum Untergrund nicht ohne Überwindung der Reibung von Rädern auf dem Untergrund möglich ist, das Flurförderzeug also auch ohne Bremswirkung aufgrund der Radstellungen an einer Verlagerung relativ zum Untergrund gehindert wird.

Wiederum bevorzugt ist eine Weiterbildung des erfindungsgemäßen Lenkverfahrens, bei welcher bei Wahl des Längsfahrtprogramms die Lenkwinkel aller gelenkten Räder auf Winkelpositionen von 0°, bei Wahl des Querfahrtprogramms auf Winkelpositionen von 90° und bei Wahl des Karussellfahrtprogramms oder des Parkprogramms die jeweils von den gelenkten Rädern benötigten Winkelpositionen direkt angesteuert werden.

Des Weiteren bevorzugt ist eine Weiterbildung des erfindungsgemäßen Lenkverfahrens, bei welcher mit einem vorzugsweise zusätzlich zum Lenkgeber vorgesehenen Steuerorgan ein Lenkpol, in dem sich bei einer von einer geradlinigen Bewegung des Flurförderzeugs die Radrehachsen schneiden, vorzugsweise kontinuierlich verlagerbar ist. Bei diesem Lenkverfahren verschwinden die Grenzen zwischen Längsfahrt- und Querfahrtprogrammen und das Flurförderzeug kann ohne Unterbrechung des Fahrzugstandes besonders variabel manövriert werden.

Erfindungsgemäß ist das Lenkverfahren derart ausgebildet, dass bei einer an einem der lenkbaren Räder festgestellten, unerwarteten Differenz von dessen Winkelposition zu dessen Winkelsollwert die elektrische Leistungselektronik so angesteuert wird, dass die Lenkung dieses lenkbaren Rades und gegebenenfalls jedes weiteren zur selben Achse gehörenden lenkbaren Rades abgeschaltet wird. So lassen sich unerwünscht unkontrollierte Fahrzustände verhindern. Hierdurch wird die Betriebssicherheit eines entsprechend ausgerüsteten Flurförderzeugs erhöht.

Schließlich ist es zur nochmaligen Verbesserung der Betriebssicherheit des Flurförderzeugs von Vorteil, dessen Lenkverfahren derart auszubilden, dass bei einer an einem der lenkbaren Räder festgestellten, unerwarteten Differenz von dessen Winkelposition zu dessen Winkelsollwert, die zu einem kritischen Fahrzustand führen könnte, der Fahrantrieb des Flurförderzeugs abgeschaltet wird, beispielsweise durch Unterbrechung der Beaufschlagung der elektrischen Fahrmotoren mit elektrischer Leistung.

Bei dem Lenksystem für ein Flurförderzeug zur Durchführung des vorstehend beschriebenen Lenkverfahrens sind die Lenkmotoren erfindungsgemäß als Elektromotoren, vorzugsweise als AC-Motoren oder als Synchronmotoren ausgebildet.

Eine die Lenkmotoren mit elektrischer Leistung beaufschlagende Leistungselektronik ist dann vorzugsweise derart ausgebildet, dass sie zur Ansteuerung sowohl von AC-Motoren, als auch von Synchronmotoren geeignet ist. Ein modularer Aufbau eines Lenksystems ist somit möglich, ohne dass hierzu unterschiedliche Leistungselektroniken bereitgestellt werden müssten. Unabhängig davon ist die Leistungselektronik vorzugsweise derart ausgebildet, dass sie auch zur Beaufschlagung von mindestens einem Fahrmotor des Flurförderzeugs mit elektrischer Leistung dient, deren Höhe mittels eines Fahrtgebers, beispielsweise eines "Gaspedals" beeinflussbar ist.

Um die Lenkbarkeit jedes gelenkten Rades auch bei Beaufschlagung des zugeordneten Fahrmotors mit maximaler elektrischer Leistung zu gewährleisten, beträgt die maximale Leistung ("Nennleistung") des jeweiligen Lenkmotors vorzugsweise zwischen 10 % und 50 %, besonders bevorzugt zwischen 20 % und 40 %, abermals bevorzugt zwischen 25 % und 35 % der maximalen Leistung ("Nennleistung") des Fahrmotors. Beispielsweise kann bei einem Flurförderzeug mit vier lenkbaren Rädern, von denen zwei mit Hilfe jeweils eines Fahrmotors angetrieben sind, und welches ein Eigengewicht im betriebsbereiten Zustand von etwa sieben Tonnen aufweist, jeder Lenkmotor eine Leistung von etwa 1 kW und jeder Fahrmotor eine Leistung von etwa 4 kW aufweisen.

Der Lenkcomputer umfasst - besonders bevorzugt - eine Einrichtung zum Speichern mehrerer Lenkprogramme.

Besonders bevorzugt ist es weiterhin, wenn jedem lenkbaren Rad ein vorzugsweise als elektrischer oder elektronischer Lenkwinkelsensor ausgebildeter Lenkwinkelaufnehmer zugeordnet ist, da hierdurch die Erfassung der Winkelposition des jeweiligen Rades besonders einfach und zuverlässig möglich ist.

Der Lenksollwertgeber umfasst vorzugsweise einen Impulsausgang, an dem elektrische Impulse erzeugt werden, deren Anzahl von der Betätigung des Lenkgebers, insbesondere des Drehwinkels eines Lenkrades, und gegebenenfalls von einem zusätzlich zum Lenkgeber vorgesehenen Steuerorgans, beispielsweise einen Joystick abhängig sind.

Ganz besonders bevorzugt ist eine Weiterbildung des erfindungsgemäßen Lenksystems, bei der Winkelpositionen der gelenkten Räder von zumindest 0° <= Winkelposition <= 360° erzielbar sind, mit anderen Worten die lenkbaren Räder um mindestens 360° um eine jeweilige Lenkachse lenkbar vorgesehen sind.

Bei dem erfindungsgemäßen Lenksystem sind die Lenkmotoren vorzugsweise als Rotationsmotoren mit jeweils einer Antriebswelle ausgebildet, wobei die Antriebswelle jeweils über ein flexibles Zugmittel oder ein Zahnradgetriebe mit jeweils einer Lenkwelle, die eine Lenkachse definiert, wirkverbunden sind. Bei einem derart ausgebildeten Lenksystem ist es technologisch vergleichsweise einfach, jedes lenkbare Rad um zumindest 360° um seine zugehörige Lenkachse drehen zu können.

Die Erfindung erstreckt sich auch auf ein Flurförderzeug mit einem zuvor beschriebenen Lenksystem.

Die Erfindung soll nun anhand von Ausführungsbeispielen näher erläutert werden. Es zeigen rein schematisch:
- Fig. 1: ein Blockdiagramm eines erfindungsgemäßen Lenksystems am Beispiel eines drei Räder aufweisenden Flurförderzeugs in Längsfahrt;
- Fig. 2: dasselbe Blockdiagramm des Lenksystems am Beispiel desselben Flurförderzeugs in Querfahrt;
- Fig. 3: eine Ansicht der Anordnung von Lenkmotoren und Radanordnungen eines vierrädrigen Flurförderzeugs;
- Fig. 4: eine Prinzipdarstellung eines Signalflussplanes eines gelenkten Rades, wobei der Lenkmotor über ein flexibles Zugmittel mit einer Lenkwelle gekoppelt ist;
- Fig. 5: eine Fig. 4 entsprechende Darstellung, wobei jedoch der Lenkmotor über ein Zahnradgetriebe mit der Lenkwelle verbunden ist;
- Fig. 6a, 6b: die Funktionsweise eines Lenkprogramms "Vorderachslenkung Querfahrt";
- Fig. 7a, 7b: die Funktionsweise eines Lenkprogramms "Allradlenkung Querfahrt";
- Fig. 8a, 8b: die Funktionsweise eines Lenkprogramms "Hinterachslenkung Querfahrt";
- Fig. 9a, 9b: die Funktionsweise eines Lenkprogramms "Diagonallenkung Querfahrt";
- Fig. 10a, 10b: die Funktionsweise eines Lenkprogramms "Vorderachslenkung Längsfahrt";
- Fig. 11a, 11b: die Funktionsweise eines Lenkprogramms "Allradlenkung Längsfahrt";
- Fig. 12a, 12b: die Funktionsweise eines Lenkprogramms "Hinterachslenkung Längsfahrt";
- Fig. 13a, 13b: die Funktionsweise eines Lenkprogramms "Diagonallenkung Längsfahrt";
- Fig. 14: die Funktionsweise eines Lenkprogramms "Karussellfahrt";
- Fig. 15: die Funktionsweise eines "Parkprogramms" sowie
- Fig. 16a bis 16c: die Funktionalität eines Lenkprogramms "Allrad-variabel", bei welchem der Lenkpol, in dem sich die Drehachsen der Räder bei Kurvenfahrt schneiden, mit Hilfe eines separaten Lenkorgans stufenlos verlagert werden kann.

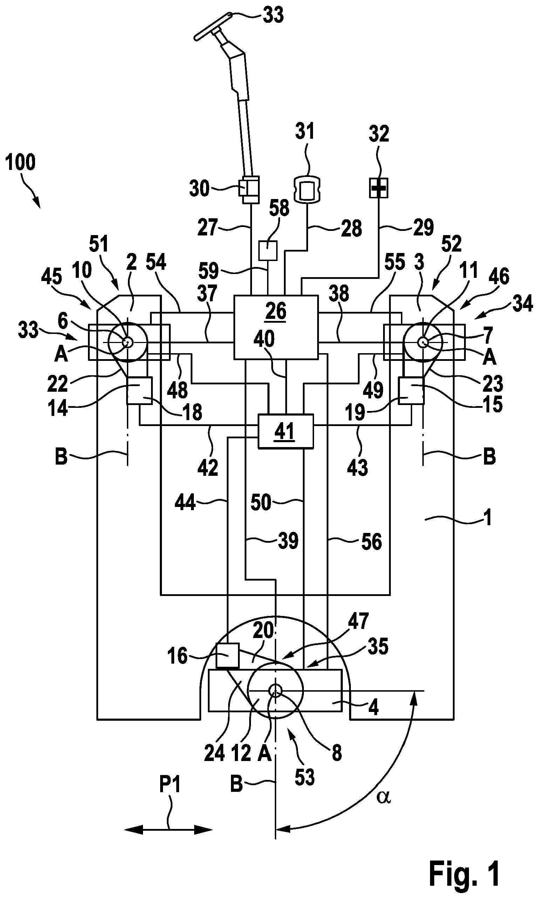

Fig. 1 zeigt schematisch ein Flurförderzeug 100, welches einen in Aufsicht etwa U-förmigen Rahmen 1 und drei an diesem um Lenkachsen A lenkbar gelagerte Räder 2, 3, 4 umfasst. Sämtliche Räder 2, 3, 4 sind in Fig. 1 derart ausgerichtet, dass sich ihre Radachsen B parallel zueinander erstrecken. Diese Radstellungen entsprechen einer geradlinigen Fahrt des Flurförderzeugs in Längsfahrtrichtung, die durch den Pfeil P1 symbolisiert ist.

Die Lenkachsen A der Räder 2, 3, 4 werden von Lenkwellen 6, 7, 8 gebildet, mit denen das jeweilige Rad über einen in der Zeichnung nicht dargestellten Radträger bezüglich den Lenkachsen A drehfest verbunden ist.

An jeder Lenkwelle 6, 7, 8 ist ein Drehkranz 10, 11, 12 drehfest befestigt. Für jedes der Räder 2, 3, 4 ist ein Lenkmotor 14, 15, 16 mit jeweils ebenfalls einem Drehkranz 18, 19, 20 tragenden Antriebswelle vorgesehen. Zur Drehmomentübertragung zum Zwecke des Lenkens des jeweiligen Rades 2, 3, 4 sind die Drehkränze 18, 19, 20 der Lenkmotoren 14, 15, 16 jeweils über ein flexibles Zugmittel 22, 23, 24 mit den Drehkränzen 10, 11, 12 verbunden. Bei den flexiblen Zugmitteln kann es sich beispielsweise um Ketten oder auch Zahnriemen handeln. Die Drehkränze 10, 11, 12; 18, 19, 20 sind an das jeweilige Zugmittel angepasst.

Die Lenkmotoren 14, 15, 16 sind als Elektromotoren, insbesondere als AC-Motoren oder als Synchronmotoren ausgebildet und bilden einen Teil eines Lenksystems des Flurförderzeugs 100.

Das Lenksystem umfasst des Weiteren einen Lenkcomputer 26, an den über Datenleitungen 27, 28, 29 ein Lenksollwertgeber 30, ein Eingabefeld 31 und ein als Joystick ausgebildetes Steuerorgan 32 angeschlossen sind. Der Lenksollwertgeber 30 ist mit einem Lenkrad 33 gekoppelt.

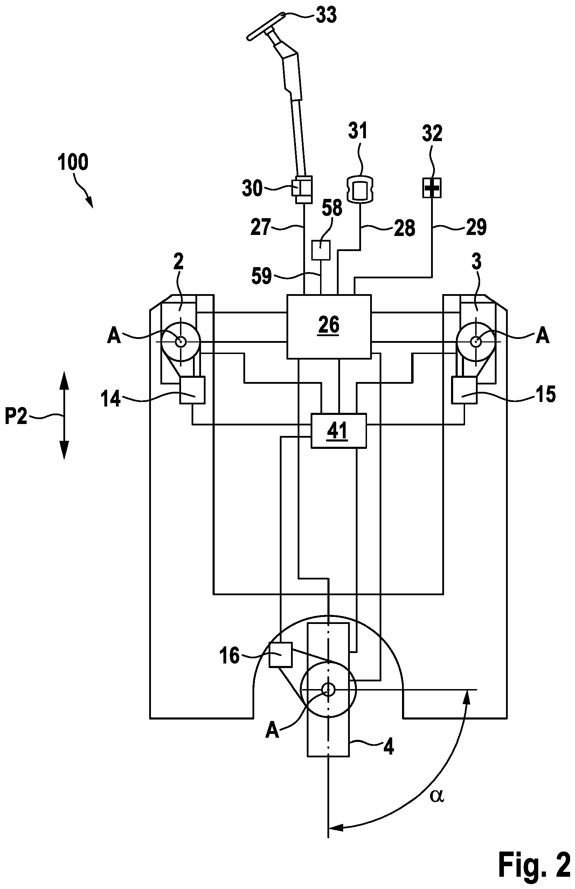

Jedem Rad 2, 3, 4 ist ein in der Zeichnung nicht im einzelnen dargestellter Lenkwinkelaufnehmer 33, 34, 35 zugeordnet, der jeweils als elektronischer Lenkwinkelsensor ausgebildet ist und jeweils die momentane Lenkwinkelposition α des jeweiligen Rades 2, 3, 4 erfasst. Bei der in Fig. 1 dargestellten Längsfahrt betragen die Lenkwinkelpositionen α 0°, bei der in Fig. 2 dargestellten Querfahrt 90°. Über Datenleitungen 37, 38, 39 werden die mit den Lenkwinkelaufnehmern 33, 34, 35 erfassten Lenkwinkel dem Lenkcomputer 26 bereitgestellt.

Der Lenkcomputer 26 ist über eine Ansteuerleitung 40 mit einer Leistungselektronik 41 verbunden.

Über elektrische Leistungsleitungen 42, 43, 44 sind die Lenkmotoren 14, 15, 16 an die Leistungselektronik 41 angeschlossen.

Bei dem in Fig. 1 und 2 dargestellten Ausführungsbeispiel ist jedem der lenkbaren Räder 2, 3, 4 ist ein separater, elektrischer Fahrmotor 45, 46, 47 zugeordnet, der in der Zeichnung nicht im Einzelnen erkennbar ist. Die Fahrmotoren 45, 46, 47 sind über Leistungsleitungen 48, 49, 50 mit der Leistungselektronik 41 verbunden. Es ist jedoch ebenfalls möglich, nur einen Teil der lenkbaren Räder, beispielsweise nur dem Mittelrad 4 einen Antriebsmotor zuzuordnen und die verbleibenden Räder 2, 3 freilaufend auszubilden. Zur Beeinflussung der elektrischen Leistung, mit dem die Fahrmotoren beaufschlagt werden, ist ein Gaspedal vorgesehen, welches über eine Datenleitung mit dem Lenkcomputer 26 verbunden ist.

Ferner ist jedem der Räder 2, 3, 4 ein in der Zeichnung wiederum nicht erkennbarer Raddrehzahlsensor 51, 52, 53 zugeordnet. Jeder Raddrehzahlsensor 51, 52, 53 ist über eine Datenleitung 54, 55, 56 mit dem Lenkcomputer verbunden.

Wie bereits erwähnt, ist in Fig. 1 das Flurförderzeug 100 in seiner durch den Pfeil P1 symbolisierten Längsfahrtrichtung dargestellt. Um diese einzuleiten, wurde mit dem Eingabefeld 31 ein in dem Lenkcomputer 26 gespeichertes "Längsfahrtprogramm" aktiviert.

Fig. 2 zeigt nun dasselbe Flurförderzeug 100 nach Auswahl eines in dem Lenkcomputer 26 gespeicherten "Querfahrtprogramm" mit Hilfe des Eingabefeldes 31. Wie durch Vergleich der Figuren 1 und 2 erkennbar ist, wurden die Räder 2, 3, 4 mit Hilfe der Lenkmotoren 14, 15, 16 jeweils um einen Lenkwinkel α von 90° um die jeweilige Längsachse A gedreht, so dass das Flurförderzeug 100 im Falle eines Antriebs sich nun in Querfahrtrichtung bewegt, die durch den Pfeil P2 symbolisiert ist.

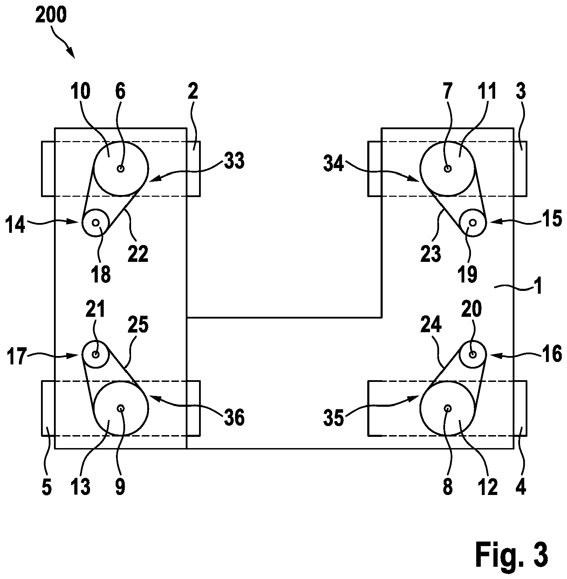

Fig. 3 zeigt eine Ansicht der Anordnung von Lenkmotoren und Radanordnungen eines vierrädrigen Flurförderzeugs in einer schematischen Aufsicht. Das Flurförderzeug 200 gemäß dieses Ausführungsbeispiels umfasst im Unterschied zu dem anhand der Figuren 1 und 2 beschriebenen zusätzlich zu den drei Rädern 2, 3, 4 ein viertes Rad 5, welches mittels einer Lenkwelle 9 um eine Lenkachse A drehbar an dem Rahmen 1 gelagert ist. Die Räder 2, 3, 4, 5 sind bei diesem vierrädrigen Flurförderzeug an den Ecken eines Rechtecks angeordnet. An der Lenkwelle 9 ist wiederum ein Drehkranz 13 drehfest befestigt. Es ist ein vierter Lenkmotor 17 mit einem an einer Antriebswelle des Lenkmotors 17 drehfest befestigten Drehkranz 21 vorgesehen. Zur Übertragung von Drehmomenten zwischen dem Drehkranz 21 und dem Drehkranz 13 ist wiederum ein flexibles Zugmittel 25 vorgesehen. Dem Rad 5 ist ebenfalls ein Lenkwinkelaufnehmer 36 zugeordnet.

Die Anordnungen, Ausgestaltung und Funktionsweise des Rades 5 und der zuvor beschriebenen Komponenten entsprechen denjenigen des anhand der Figuren 1 und 2 beschriebenen Flurförderzeugs 100, so dass zwecks Vermeidung von Wiederholungen auf dessen Beschreibung verwiesen sei. Auch umfasst das Flurförderzeug 200 die in den Figuren 1 und 2 dargestellten weiteren Komponenten, wie beispielsweise den Lenksollwertgeber 30, das Lenkrad 33, das Eingabefeld 31, das Steuerorgan 32, der Lenkcomputer 26 und die Leistungselektronik 41 samt zugehöriger Datenleitungen und Leistungsleitungen, wobei bei dem Flurförderzeug 200 zusätzliche, in der Zeichnung nicht dargestellte Datenleitungen und Leistungsleitungen für die Anordnung des Rades 5 vorgesehen sind. Darüber hinaus ist auch bei dem Flurförderzeug 200 jedem der Räder 2, 3, 4, 5 ein Fahrmotor zugeordnet, der in entsprechender Weise wie die Fahrmotoren 45, 46, 47 beim Ausführungsbeispiel 100 ausgestaltet und mit elektrischer Leistung beaufschlagbar sind. Wiederum ist es auch bei einem vierrädrigen Flurförderzeug möglich, nur einen Teil der Räder, beispielsweise den Rädern 4, 5 Fahrmotoren zuzuordnen.

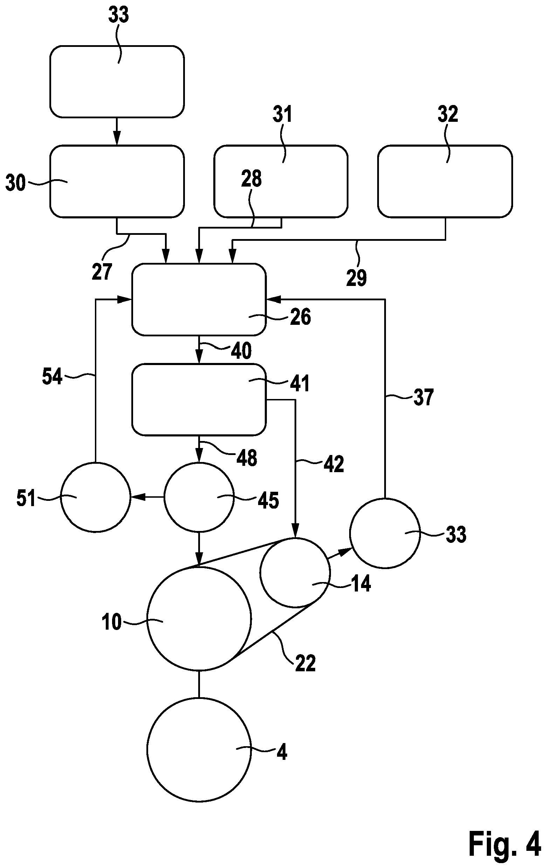

Fig. 4 zeigt eine Prinzipdarstellung eines Signalflussplanes, wie er für jedes der gelenkten und angetriebenen Räder verwirklicht ist, am Beispiel des Rades 4.

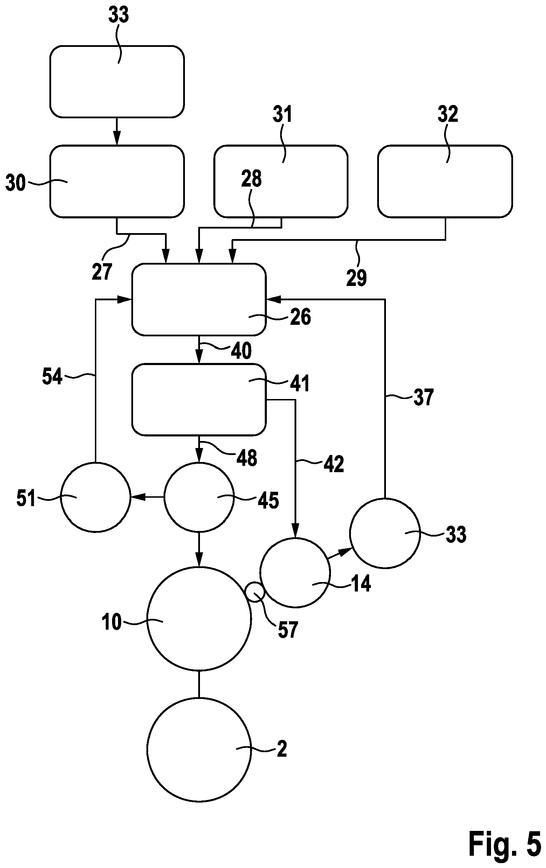

In Fig. 5 ist eine weitere Prinzipdarstellung eines Signalflussplanes eines gelenkten und angetriebenen Rades am Beispiel des Rades 4 dargestellt, die derjenigen gemäß Fig. 4 entspricht. Der einzige Unterschied besteht darin, dass der Lenkmotor 14 nicht über ein flexibles Zugmittel 22 mit dem Stirnrad 10 und damit mit der entsprechenden Lenkwelle gekoppelt ist, sondern mit Hilfe eines Stirnrades 57.

Bei dem beschriebenen Ausführungsbeispiel sind in dem Lenkcomputer 26 verschiedene Lenkprogramme hinterlegt, die beispielsweise mit Hilfe des Eingabefeldes 31 ausgewählt werden können. Der Lenkcomputer 26 ist so programmiert, dass nach dem Einschalten des Lenksystems ein parametriertes Standard-Lenkprogramm aktiviert wird. Die gelenkten Räder verbleiben in der beim Einschalten des Lenksystems befindlichen Winkelposition und werden erst nach Fahrtrichtungsvorwahlausgelenkt..

Der Lenkcomputer ist des Weiteren so programmiert, dass die Auswahl eines Lenkprogrammes - beispielsweise mit Hilfe des Eingabefeldes - nur unter bestimmten Bedingungen freigegeben werden kann. Hierzu muss gemäß einer bevorzugten Programmierung des Lenkcomputers das Flurförderzeug stehen, dass gewählte Lenkprogramm freigegeben sein, die Lenkung aktiv sein und eine etwaige vorherige Notabschaltung quittiert worden sein.

Nach einer Aktivierung eines Lenkprogramms wird die Leistungselektronik 41 über die Datenleitung 40 von dem Lenkcomputer 26 derart angesteuert, dass die gelenkten Räder in die der Fahrtrichtung entsprechenden Winkelpositionen gelenkt werden. Die Winkelpositionen der gelenkten Räder werden mit den Lenkwinkelaufnehmern 33, 34, 35, 36 erfasst und mit dem vom Lenkcomputer 26 in Abhängigkeit des gewählten Lenkprogramms vorgegebenen verglichen. Dabei werden die Lenkmotoren im Sinne einer Minimierung der Soll/Istwert-Differenz angesteuert.

Während einer Lenkprogrammauswahl wird die Leistungselektronik 41 von dem Lenkcomputer 26 derart angesteuert, dass die Fahrmotoren nicht aktiviert sind. Auch werden eventuell vom Lenksollwertgeber übermittelte Daten nicht berücksichtigt. Mit anderen Worten ist das Lenkrad in diesem Zustand nicht aktiv.

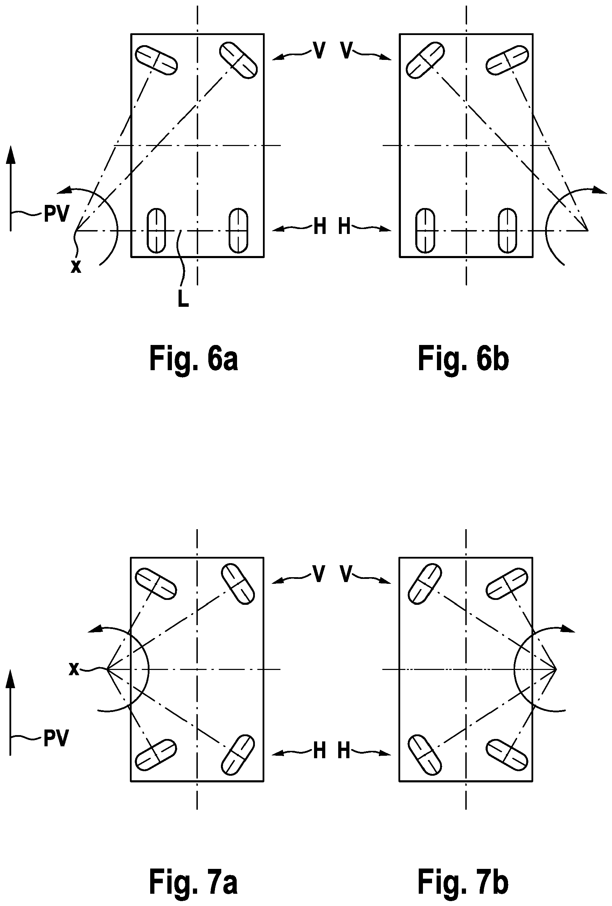

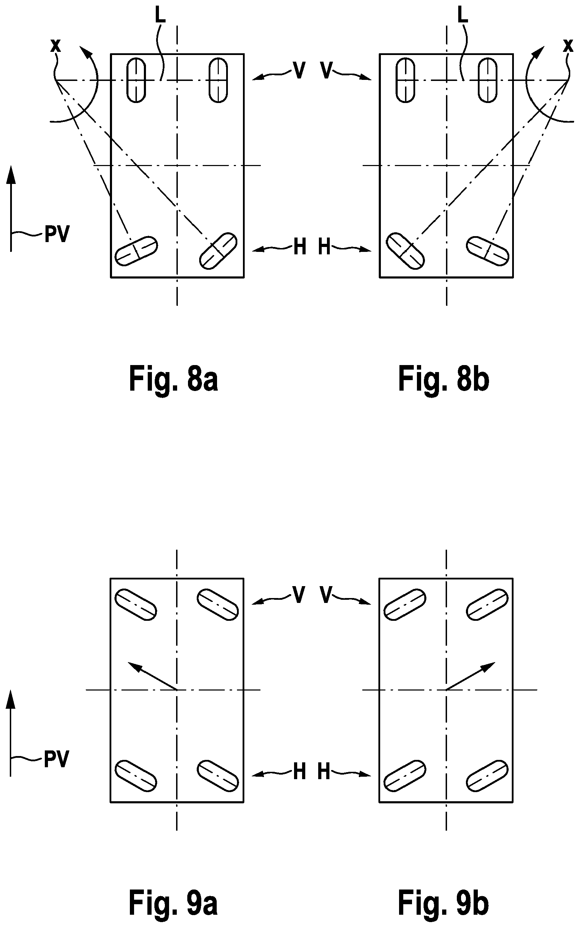

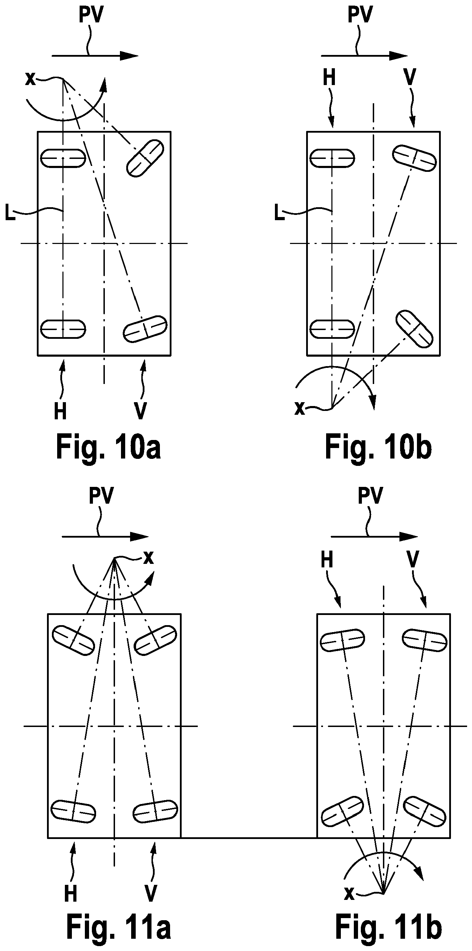

Der Lenkcomputer kann insbesondere die folgenden Lenkprogramme aufweisen:
a) Vorderachslenkung Querfahrt, dargestellt in Fig. 6a und 6b.
   Bei der Vorderachslenkung werden lediglich die Räder derjenigen Achse gelenkt, die bezüglich der Vorwärtsrichtung PV die Vorderachse V bildet. Die Lenkgeometrie ist mit der eines vierrädrigen PKWs vergleichbar. Für eine genaue Lenkung muss die Lenklinie L exakt durch die Hinterachse H verlaufen, wie dies in Fig. 6a und 6b erkennbar ist. Je nach Betätigung des Lenkgebers werden die gelenkten Vorderräder in Winkelpositionen verlagert, so dass sich ihre Drehachsen in einem Lenkpol X schneiden. Dieser Lenkpol liegt stets auf der Lenklinie L.
b) Querfahrt Allradlenkung, dargestellt in Fig. 7a und 7b.
   Bei diesem Lenkprogramm werden abhängig vom Lenkgeber sämtliche Räder gelenkt. Bei Kurvenfahrt müssen sich ihre Drehachsen sämtlich in einem gemeinsamen Lenkpol X schneiden.
c) Querfahrt Hinterachslenkung, dargestellt in Fig. 8a und 8b.
   Bei diesem Lenkprogramm werden nur die Räder der bezüglich der Vorwärts-Querfahrtrichtung hinteren Achse H gelenkt. Der Lenkpol X liegt auf einer Lenklinie L, die mit der Vorderachse V zusammenfällt.
d) Querfahrt Diagonallenkung, dargestellt in Fig. 9a und 9b.
   Abhängig von einer Lenkgeberbetätigung werden sämtliche Räder in identischen Winkelpositionen gelenkt, so dass sich die Fahrtrichtung des Fahrzeugs ändert, ohne dass es seine Ausrichtung verändert.
e) Vorderachslenkung Längsfahrt, dargestellt in Fig. 10a und 10b.

Dieses Lenkprogramm entspricht demjenigen des Lenkprogramms Vorderachslenkung Querfahrt, wobei jedoch die Fahrtrichtung gegenüber der Querfahrt um 90° verschieden ist.

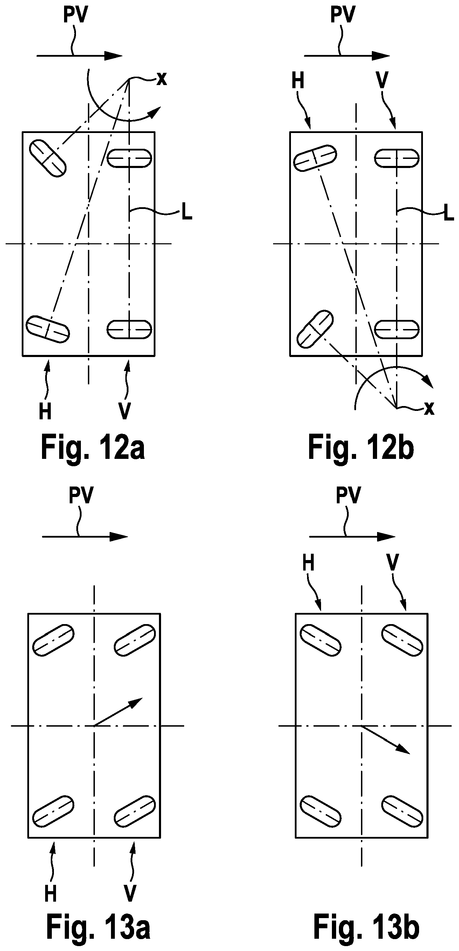

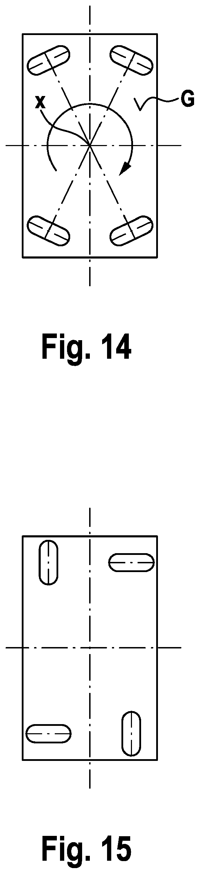

Sinngemäß dasselbe gilt auch für die Lenkprogramme Längsfahrt Allradlenkung, dargestellt in Fig. 11a und 11b, Längsfahrt Hinterachslenkung, dargestellt in Fig. 12a und 12b sowie Längsfahrt Diagonalrichtung, dargestellt in Fig. 13a und 13b. f) Karussellfahrt, dargestellt in Fig. 14.

Bei diesem Lenkprogramm liegt der Lenkpol X, in dem sich die Drehachse der Räder schneiden, innerhalb einer Grundfläche G des Flurförderzeugs.
g) Parkprogramm, dargestellt in Fig. 15.

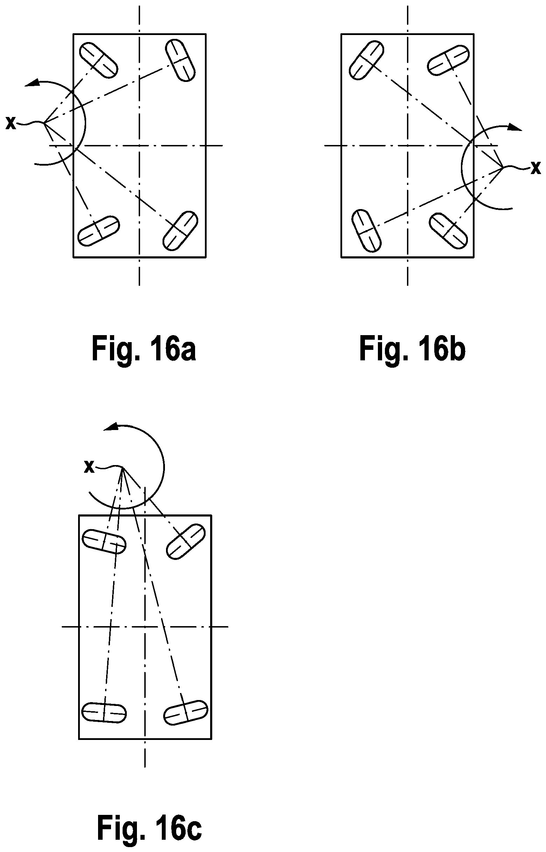

Im Parkprogramm werden die Räder völlig unabhängig voneinander jeweils in eine vorprogrammierte Winkelposition gebracht, so dass das Flurförderzeug gegen ein Wegrollen auch ohne Bremsbetätigung gesichert ist.
h) Variabel Allradlenkung, dargestellt in Fig. 16a, 16b und 16c.

Dieses Lenkprogramm entspricht zunächst dem Lenkprogramm Allradlenkung. Mit Hilfe des zusätzlichen, an den Lenkcomputer 26 angeschlossen Steuerorgan 32, das beispielsweise als Joystick ausgebildet sein kann, kann nun der Lenkpol vorzugsweise kontinuierlich verlagert werden, so dass das Flurförderzeug ohne Unterbrechung des Fahrzustandes besonders variabel manövriert werden kann. Sämtliche Räder sind zu diesem Zweck um 360° um die Lenkachsen A drehbar.

Der Lenkcomputer kann bei den beschriebenen Ausführungsbeispielen derart ausgebildet sein, dass unterschiedliche Geräte als Lenksollwertgeber auswählbar sind, die aber in jedem Fall über einen Impulsausgang verfügen müssen (von einem Betrieb über eine Funkfernsteuerung, bei welcher der Lenksollwertgeber nicht aktiviert wäre, einmal abgesehen). Vorzugsweise sind folgende Parameter wählbar:
1. Impulsausgang Clock / UpDown oder A/B-Spur:
   Bei Parameterwahl "Impulsausgang Clock / UpDown" ist der Lenkcomputer einem Lenksollwertgeber angepasst, dessen Impulse Informationen über die Lenkrichtung, beispielsweise die Drehrichtung des Lenkrades, enthalten.
   Bei Parameterwahl "A/B-Spur" ist der Lenkcomputer einem Lenksollwertgeber angepasst, der Impulse auf zwei Spuren A und B, die um 90° versetzt sind, erzeugt. Der Lenkcomputer erkennt die Lenkrichtung, beispielsweise die Drehrichtung des Lenkrades, anhand der vom Lenksollwertgeber erhaltenen Signalfolge.
2. Anzahl der pro Lenkradumdrehung vom Lenksollwertgeber erzeugten Impulse.
3. Drehrichtung.

Der Lenkcomputer ist des Weiteren so ausgelegt, dass bei einer Betätigung des Lenkgebers, beispielsweise der Drehung des Lenkrades, die erzeugten Impulse von dem Lenkcomputer gezählt und zu einem absoluten Lenksollwert aufbereitet werden. Aus Parametern der Achskoordinaten und des jeweils gewählten Lenkprogramms errechnet der Lenkcomputer die zur Erzielung der gewünschten Richtungsänderung erforderlichen Winkelsollwerte der gelenkten Räder.

Die Winkelpositionen der mit Hilfe von elektrischen AC-Motoren oder Synchronmotoren gelenkten Räder werden über die Lenkwinkelaufnehmer 33, 34, 35, 36, die als potentiometrische Lenkwinkelgeber ausgebildet sein können, erfasst. Aus den potentiometrischen Signalen und abgespeicherten Abgleichwerten wird der Istwinkel des jeweiligen gelenkten Rades berechnet. Der Lenkcomputer vergleicht die so ermittelte Winkelposition (Istwinkel) mit dem für das jeweils gewählte Lenkprogramm in Abhängigkeit des Lenksollwerts ermittelten Winkelsollwert mit der Winkelposition. Anhand der Soll/Istwertdifferenz wird von dem Lenkcomputer 26 die Leistungselektronik 41 so angesteuert, dass sie den Lenkmotor im Sinne eines Soll/Istwertausgleichs betätigt.

Tritt bei einem gelenkten Rad einer Lenkachse ein Fehler auf, wird beispielsweise keine Winkelposition übermittelt, so werden die Lenkbetätigungen der gelenkten Räder dieser Achse deaktiviert und die gelenkten Räder vorzugsweise durch eine entsprechende, im Lenkcomputer hinterlegte Routine in eine Neutralstellung, die beispielsweise ihren Ausgangswinkelpositionen oder Geradeausfahrstellungen entsprechen, gebracht. Die gelenkten Räder der anderen, nicht betroffenen Achsen bleiben hingegen aktiv und erlauben auf diese Weise Lenkkorrekturen auszuführen. Des Weiteren enthält der Lenkcomputer eine Routine, die bei jedem kritischen Fehler der Lenkung die Leistungselektronik derart angesteuert, dass das Flurförderzeug vollständig gestoppt wird.

### Bezugszeichenliste:

- 100, 200: Flurförderzeug
- 1: Rahmen
- 2, 3, 4, 5: Rad
- 6, 7, 8, 9: Lenkwelle
- 10, 11, 12, 13: Drehkranz
- 14, 15, 16, 17: Lenkmotor
- 18, 19, 20, 21: Drehkranz
- 22, 23, 24, 25: flexible Zugmittel
- 26: Lenkcomputer
- 27, 28, 29: Datenleitungen
- 30: Lenksollwertgeber
- 31: Eingabefeld
- 32: Steuerorgan
- 33, 34, 35, 36: Lenkwinkelaufnehmer
- 37, 38, 39: Datenleitungen
- 40: Ansteuerleitung
- 41: Leistungselektronik
- 42, 43, 44: Leistungsleitungen
- 45, 46, 47: Fahrmotor
- 48, 49, 50: Leistungsleitungen
- 51, 52, 53: Radrehzahlsensoren
- 54, 55, 56: Datenleitungen
- 57: Stirnrad
- 58: Gaspedal
- 59: Datenleitung

- A: Lenkachsen
- B: Radachsen
- G: Grundfläche
- H: Hinterachse
- P1: Längsfahrtrichtung
- P2: Querfahrtrichtung
- PV: Vorwärtsfahrtrichtung
- L: Lenklinie
- V: Vorderachse
- X: Lenkpol
- α: Winkel

## Patentansprüche

1. Lenkverfahren eines einen Fahrantrieb aufweisenden Flurförderzeugs (100, 200) mit mindestens drei lenkbaren Rädern (2, 3, 4, 5), bei dem mittels mindestens eines Lenksollwertgebers zumindest eines der mindestens drei lenkbaren Räder (2, 3, 4, 5) gelenkt und die Winkelpositionen (α) des mindestens einen gelenkten der mindestens drei lenkbaren Räder (2, 3, 4, 5) erfasst und mit Winkelsollwerten, die von einem Lenkcomputer (26) bereitgestellt werden, verglichen werden, und wobei in Abhängigkeit der so ermittelten Soll/Istwert-Differenz eine elektrische Leistungselektronik (41) angesteuert wird, mittels welcher mindestens ein dem mindestens einen gelenkten Rad zugeordneter Lenkmotor (6, 7, 8, 9) mit elektrischer Energie beaufschlagbar ist,
**dadurch gekennzeichnet, dass** bei einer festgestellten Fehlfunktion bezüglich des Rades einer Achse das betroffene lenkbare Rad und gegebenenfalls jedes weitere zur selben Achse gehörende lenkbare Rad mittels des Lenkcomputers in eine Winkelposition verlagert wird, die für das jeweils gewählte Lenkprogramm einer Neutralstellung entspricht, und dass hiernach lediglich die gelenkten Räder, die nicht zu dieser Achse gehören, im Sinne eines Soll/Istwertausgleichs der Winkelpositionen dieser Räder mit den entsprechenden Winkelsollwerten gelenkt werden.

2. Lenkverfahren nach Anspruch 1, **dadurch gekennzeichnet, dass** die Winkelpositionen des mindestens einen gelenkten der mindestens drei lenkbaren Räder (2, 3, 4, 5) in Abhängigkeit von vorwählbaren Lenkprogrammen gelenkt werden.

3. Lenkverfahren nach Anspruch 2, **dadurch gekennzeichnet, dass** während des Wählens eines Lenkprogramms der Fahrantrieb des Flurförderzeugs (100, 200) inaktiviert wird.

4. Lenkverfahren nach Anspruch 2 oder 3, **dadurch gekennzeichnet, dass** während des Wählens eines Lenkprogramms der Lenksollwertgeber (30) inaktiviert wird.

5. Lenkverfahren nach einem der Ansprüche 2 bis 4, **dadurch gekennzeichnet, dass** die wählbaren Lenkprogramme ein Längsfahrtprogramm und ein Querfahrtprogramm und vorzugsweise ein Karusellfahrtprogramm und/oder ein Diagonalfahrtprogramm und/oder ein Parkprogramm umfassen.

6. Lenkverfahren nach Anspruch 5, **dadurch gekennzeichnet, dass** bei dem Längsfahrtprogramm und/oder bei dem Querfahrtprogramm zwischen Unterlenkprogrammen Vorderachslenkung, Hinterachslenkung und Allradlenkung gewählt werden kann.

7. Lenkverfahren nach einem der Ansprüche 5 oder 6, **dadurch gekennzeichnet, dass** bei Wahl des Längsfahrtprogramms die Lenkwinkel aller gelenkten Räder (2, 3, 4, 5) auf Winkelpositionen 0°, bei Wahl des Querfahrtprogramms auf Winkelpositionen 90°, und bei Wahl des Karussellfahrtprogramms oder des Parkprogramms die jeweils von den gelenkten Rädern (2, 3, 4, 5) benötigte Winkelpositionen angesteuert werden, ohne dass hierzu der Lenksollwertgeber (30) betätigt werden muss.

8. Lenkverfahren nach einem der Ansprüche 2 bis 6, bei welchem sämtliche der mindestens drei lenkbaren Räder (2, 3, 4, 5) gelenkt werden, **dadurch gekennzeichnet, dass** mit einem vorzugsweise zusätzlich zum Lenksollwertgeber (30) vorgesehenen Steuerorgan (31) ein Lenkpol (X), in dem sich bei einer von einer geradlinigen abweichenden Bewegung des Flurförderzeugs (100, 200) die Drehachsen (D) der Räder schneiden, vorzugsweise kontinuierlich verlagerbar ist.

9. Lenkverfahren nach einem der vorhergehenden Ansprüche, **dadurch gekennzeichnet, dass** bei einer an einem der lenkbaren Räder festgestellten, unerwarteten Differenz von dessen Winkelposition zu dessen Winkelsollwert, die zu einem kritischen Fahrzustand des Flurförderzeugs (100, 200) führen kann, der Fahrantrieb des Flurförderzeugs (100, 200) abgeschaltet wird.

10. Lenksystem für ein Flurförderzeug (100, 200),
mit einem Lenkgeber (33),
mit einem Lenksollwertgeber (30), mit welchem der Lenkgeber (33) verbunden ist, und mit mindestens drei Lenkmotoren (14, 15, 16, 17) zum Lenken jeweils eines lenkbaren Rades (2, 3, 4, 5), mit einem Lenkcomputer (26) und mit einer Leistungselektronik (41) zur Durchführung eines Lenkverfahrens nach einem der Ansprüche 1 bis 9, wobei die Lenkmotoren (14, 15, 16, 17) als Elektromotoren, vorzugsweise als AC-Motoren oder als Synchronmotoren ausgebildet sind, wobei vorzugsweise die Lenkmotoren als Rotationsmotoren mit einer Antriebswelle ausgebildet sind, wobei die Antriebswelle über ein flexibles Zugmittel oder ein Zahnradgetriebe mit jeweils einer Lenkwelle wirkverbunden ist, und vorzugsweise der Lenksollwertgeber (30) einen Impulsausgang umfasst, an dem elektrische Impulse erzeugt werden, deren Anzahl von der Betätigung des Lenkgebers (33), insbesondere des Drehwinkels eines Lenkrades, abhängig sind.

11. Lenksystem nach Anspruch 10, **dadurch gekennzeichnet, dass** der Lenkcomputer (26) eine Einrichtung zum Speichern mehrerer Lenkprogramme umfasst.

12. Lenksystem nach Anspruch 10 bis 11, **dadurch gekennzeichnet, dass** jedem lenkbaren Rad ein vorzugsweise als elektrischer oder elektronischer Lenkwinkelsensor ausgebildeter Lenkwinkelaufnehmer (33, 34, 35, 36) zugeordnet ist.

13. Lenksystem nach einem der Ansprüche 10 bis 12, **dadurch gekennzeichnet, dass** das Lenksystem derart ausgebildet ist, dass Winkelpositionen (α) der gelenkten Räder von zumindest 0° <= Winkelposition (α) <= 360° erzielbar sind.

14. Flurförderzeug mit einem Lenksystem nach einem der Ansprüche 10 bis 13.

## Claims

1. A steering method of an industrial truck (100, 200) comprising a drive and having at least three steerable wheels (2, 3, 4, 5), with at least one of the at least three steerable wheels (2, 3, 4, 5) being steered by means of at least one steering setpoint value transmitter, and the angular positions (α) of the at least one steered wheel of the at least three steerable wheels (2, 3, 4, 5) being detected and compared with angle setpoint values provided by a steering computer (26), and an electrical power electronics unit (41) being controlled according to the setpoint/actual value difference thus determined, said power electronics unit being able to supply electrical energy to a steering motor (6, 7, 8, 9) associated with the at least one steered wheel, **characterized in that** in case of a malfunction determined with respect to the wheel of an axle, the steerable wheel concerned, and possibly each further steerable wheel belonging to the same axle, is displaced into an angular position by means of the steering computer, which corresponds to a neutral position for the steering programme selected in each case, and that accordingly only the steered wheels, which do not belong to said axle, are steered within the meaning of a setpoint/actual value compensation of the angular positions of said wheels with the corresponding angle setpoint values.

2. The steering method according to patent claim 1, **characterized in that** the angular positions of the at least one steered wheel of the at least three steerable wheels (2, 3, 4, 5) are steered depending on preselectable steering programmes.

3. The steering method according to patent claim 2, **characterized in that** the drive of the industrial truck (100, 200) is deactivated during selection of a steering programme.

4. The steering method according to patent claim 2 or 3, **characterized in that** the steering setpoint value transmitter (30) is deactivated during selection of a steering programme.

5. The steering method according to any one of patent claims 2 to 4, **characterized in that** the selectable steering programmes comprise a longitudinal travel programme and a transverse travel programme and preferably a carousel travel programme and/or a diagonal travel programme and/or a parking programme.

6. The steering method according to patent claim 5, **characterized in that** for the longitudinal travel programme and/or the transverse travel programme one can choose between steering subprogrammes front axles steering, rear axle steering and all-wheel steering.

7. The steering method according to any one of patent claims 5 or 6, **characterized in that,** when selecting the longitudinal travel programme, the steering angles of all steered wheels (2, 3, 4, 5) are controlled at angular positions 0°, when selecting the transverse travel programme at angular positions 90°, and when selecting the carousel travel programme or the parking programme the angular positions are controlled which are required in each case by the steered wheels (2, 3, 4, 5) without the steering setpoint value transmitter (30) having to be activated for it.

8. The steering method according to any one of patent claims 2 to 6, wherein all of the at least three steerable wheels (2, 3, 4, 5) are steered, **characterized in that** by means of a control mechanism (31) preferably provided in addition to the steering setpoint value transmitter (30), a steering pole (X), where the axes of rotation (D) of the wheels intersect in the case of a movement of the industrial truck (100, 200) departing from a rectilinear movement, can be displaced preferably continuously.

9. The steering method according to any one of the preceding claims, **characterized in that** in case of an unexpected difference determined on one of the steerable wheels between its angular position and its angle setpoint value, which might result in a critical driving condition of the industrial truck (100, 200), the drive of the industrial truck (100, 200) is deactivated.

10. The steering system for a industrial truck (100, 200),
comprising a steering transmitter (33),
comprising a steering setpoint value transmitter (30) to which the steering transmitter (33) is connected,
and comprising at least three steering motors (14, 15, 16, 17) for steering one steerable wheel (2, 3, 4, 5) each, comprising a steering computer (26) and comprising a power electronics unit (41) for carrying out a steering method according to any one of patent claims 1 to 9, wherein the steering motors (14, 15, 16, 17) are conceived as electric motors, preferably as AC motors or as synchronous motors, wherein preferably the steering motors are conceived as rotary motors with a drive shaft, wherein the drive shaft is operatively connected with a steering shaft each via a flexible traction means or a toothed gearing, and preferable the steering setpoint value transmitter (30) comprises a pulse output on which electrical pulses are generated the number of which depends upon the activation of the steering transmitter (33), in particular the angle of rotation of a steering wheel.

11. The steering system according to patent claim 10, **characterized in that** the steering computer (26) comprises a means for storing several steering programmes.

12. The steering system according to patent claim 10 to 11, **characterized in that** a steering angle transducer (33, 34, 35, 36) preferably conceived as an electric or electronic steering angle sensor will be associated with each steerable wheel.

13. The steering system according to any one of patent claims 10 to 12, **characterized in that** the steering system is conceived such that angular positions (α) of the steered wheels of at least 0° < = angular position (α) < = 360° can be achieved.

14. An industrial truck with a steering system according to any one of patent claims 10 to 13.

## Revendications

1. Procédé de direction pour un chariot de manutention (100, 200) présentant un entraînement et comprenant au moins trois roues dirigeables (2, 3, 4, 5), dans lequel au moins une des au moins trois roues dirigeables (2, 3, 4, 5) est dirigée au moyen d'au moins un émetteur de valeur de consigne de direction et les positions angulaires (α) de l'au moins une roue dirigée des aux moins trois roues dirigeables (2, 3, 4, 5) sont détectées et comparées à des valeurs angulaires de consigne, qui sont fournies par un ordinateur de direction (26), et dans lequel, en fonction de la différence entre valeur de consigne et valeur réelle ainsi déterminée, une électronique de puissance électrique (41) est commandée, au moyen de laquelle au moins un moteur de direction (6, 7, 8, 9) associé à l'au moins une roue dirigée peut être alimenté en énergie électrique,
**caractérisé en ce que**
en cas de constatation d'un dysfonctionnement concernant la roue d'un essieu, la roue dirigeable concernée et éventuellement chaque autre roue dirigeable appartenant au même essieu est déplacée au moyen de l'ordinateur de direction dans une position angulaire qui correspond à une position neutre pour le programme de direction respectivement sélectionné, et que, par conséquent, seules les roues dirigées qui n'appartiennent pas à cet essieu sont dirigées dans le sens d'une compensation valeur de consigne/valeur réelle des positions angulaires de ces roues avec les valeurs angulaires de consigne correspondantes.

2. Procédé de direction selon la revendication 1, **caractérisé en ce que** les positions angulaires d'au moins une roue dirigée des au moins trois roues dirigeables (2, 3, 4, 5) sont dirigées en fonction des programmes de direction présélectionnables.

3. Procédé de direction selon la revendication 2, **caractérisé en ce que** l'entraînement du chariot de manutention (100, 200) est inactivé pendant la sélection d'un programme de direction.

4. Procédé de direction selon la revendication 2 ou 3, **caractérisé en ce que** l'émetteur de valeur de consigne de direction (30) est inactivé pendant la sélection d'un programme de direction.

5. Procédé de direction selon l'une quelconque des revendications 2 à 4, **caractérisé en ce que** les programmes de direction sélectionnables comportent un programme de marche dans le sens longitudinal et un programme de marche dans le sens transversal et de préférence un programme de marche en carrousel et/ou un programme de marche dans le sens diagonal et/ou un programme de parking.

6. Procédé de direction selon la revendication 5, **caractérisé en ce que** pour le programme de marche dans le sens longitudinal et/ou pour le programme de marche dans le sens transversal on peut choisir entre des sous-programmes de direction, direction d'essieu avant, direction d'essieu arrière et direction toutes roues.

7. Procédé de direction selon l'une quelconque des revendications 5 ou 6, **caractérisé en ce que,** dans le cas de sélection du programme de marche dans le sens longitudinal, les angles de direction des toutes les roues dirigées (2, 3, 4, 5) sont commandés à la position angulaire 0°, dans le cas de sélection du programme de marche dans le sens transversal à la position 90°, et dans le cas de sélection du programme de marche en carrousel ou du programme de parking les positions angulaires requis dans chaque fois par les roues dirigées (2, 3, 4, 5) sont commandés sans que l'émetteur de valeur de consigne de direction (30) doive être activé pour cela.

8. Procédé de direction selon l'une quelconque des revendications 2 à 6, dans lequel toutes les roues d'au moins trois roues dirigeables (2, 3, 4, 5) sont dirigées, **caractérisé en ce qu'**un organe de commande (31), prévu de préférence en plus de l'émetteur de valeur de consigne de direction (30), permet de déplacer, de préférence en continu, un pôle de direction (X), dans lequel les axes de rotation (D) des roues se coupent lors d'un mouvement du chariot de manutention (100, 200) qui s'écarte d'un mouvement rectiligne.

9. Procédé de direction selon l'une quelconque des revendications précédentes, **caractérisé en ce que**'en cas de différence inattendue constatée sur l'une des roues dirigeables entre sa position angulaire et sa valeur angulaire de consigne, qui peut conduire à un état de marche critique du chariot de manutention (100, 200), l'entraînement du chariot de manutention (100, 200) est désactivé.

10. Système de direction pour un chariot de manutention (100, 200), comportant un émetteur de direction (33),
comportant un émetteur de valeur de consigne de direction (30) auquel l'émetteur de direction (33) est relié, et comportant au moins trois moteurs de direction (14, 15, 16, 17) pour la direction d'une roue dirigeable (2, 3, 4, 5) chacun, comportant un ordinateur de direction (26) et comportant une électronique de puissance (41) pour la réalisation d'un procédé de direction selon l'une quelconque des revendications 1 à 9, dans lequel les moteur de direction (14, 15, 16, 17) sont conçus en tant que moteurs électriques, de préférence, en tant que moteurs AC ou en tant que moteurs synchrones, dans lequel, de préférence, les moteurs de direction sont conçus en tant que moteurs rotatifs avec un arbre d'entraînement, dans lequel l'arbre d'entraînement est relié de manière opérationnelle à un arbre de direction chacun par un moyen de traction flexible ou un engrenage, et l'émetteur de valeur de consigne de direction (30) comporte, de préférence, une sortie d'impulsion à laquelle des impulsions électriques sont générées dont le nombre dépend de l'activation de l'émetteur de direction (33), surtout de l'angle de rotation du volant.

11. Système de direction selon la revendication 10, **caractérisé en ce que** l'ordinateur de direction (26) comporte un moyen pour stocker plusieurs programmes de direction.

12. Système de direction selon la revendication 10 à 11, **caractérisé en ce que** chaque roue dirigeable est associée à un capteur d'angle de direction (33, 34, 35, 36), conçu de préférence en tant que sonde d'angle de direction électrique ou électronique.

13. Système de direction selon l'une quelconque des revendications 10 à 12, **caractérisé en ce que** le système de direction est conçu de telle sorte que des positions angulaires (α) des roues dirigées d'au moins 0° < = position angulaire (α) < = 360° puissent être atteint.

14. Chariot de manutention comportant un système de direction selon l'une quelconque des revendications 10 à 13.
